# EUROPEAN PATENT APPLICATION

(11) **EP 4 191 544 A1**
(43) Date of publication of application: **07.06.2023**
(21) Application number: 22209356.9
(22) Date of filing: 24.11.2022
(51) Int. Cl.: G06V 10/80, G06V 20/70

(54) **METHOD AND APPARATUS FOR RECOGNIZING TOKEN, ELECTRONIC DEVICE AND STORAGE MEDIUM**

(30) Priority: 29.12.2021 CN 202111639537
(71) Applicant: Beijing Baidu Netcom Science Technology Co., Ltd., Beijing 100085 (CN)
(72) Inventor: LI, Wei, Beijing, 100085 (CN); XIAO, Xinyan, Beijing, 100085 (CN); LIU, Jiachen, Beijing, 100085 (CN)
(74) Representative: advotec.

(57) **Abstract**

A method and an apparatus for recognizing a token, an electronic device and a storage medium relate to the field of artificial intelligence technologies such as deep learning and natural language processing. The method includes: obtaining first modal data and second modal data; determining a first token of the first modal data and a second token of the second modal data; determining an associated token between the first token and the second token; and recognizing a target shared token between the first modal data and the second modal data based on the first token, the second token and the associated token. The fine-grained associated fusion of the first token and the second token is implemented based on the associated token, thereby obtaining more accurate and richer cross-modal tokens, effectively improving the generality and generalization of the tokens and effectively enhancing the effect of recognizing a token.

## Description

### TECHNICAL FIELD

The invention provides a method for recognizing a token, an apparatus for recognizing a token, an electronic device and a storage medium, and relates to the field of computer technology, in particular to the field of Artificial intelligence (AI) technologies such as deep learning and natural language processing.

### BACKGROUND

AI is a subject that causes computers to simulate certain thinking processes and intelligent behaviors (such as learning, reasoning, thinking and planning) of human beings, which covers both hardware-level technologies and software-level technologies. The AI hardware technologies generally include technologies such as sensors, special AI chips, cloud computing, distributed storage, and big data processing. The AI software technologies generally include several major aspects such as computer vision technology, speech recognition technology, natural language processing technology, machine learning/deep learning, big data processing technology and knowledge graph technology.

### SUMMARY

The invention provides a method for recognizing a token, an apparatus for recognizing a token, an electronic device, a storage medium and a computer program product.

According to a first aspect of the invention, a method for recognizing a token is performed by an electronic device. The method includes: obtaining first modal data and second modal data; determining a first token of the first modal data and a second token of the second modal data; determining an associated token between the first token and the second token; and recognizing a target shared token between the first modal data and the second modal data based on the first token, the second token and the associated token.

According to a second aspect of the invention, an apparatus for recognizing a token is provided. The apparatus includes: an obtaining module, a first determining module, a second determining module and a recognizing module. The obtaining module is configured to obtain first modal data and second modal data. The first determining module is configured to determine a first token of the first modal data and a second token of the second modal data. The second determining module is configured to determine an associated token between the first token and the second token. The recognizing module is configured to recognize a target shared token between the first modal data and the second modal data based on the first token, the second token and the associated token.

According to a third aspect of the invention, an electronic device is provided. The electronic device includes: at least one processor and a memory communicatively coupled to the at least one processor. The memory stores instructions executable by the at least one processor, and when the instructions are executed by the at least one processor, the at least one processor is enabled to implement the method according to the first aspect of the invention.

According to a fourth aspect of the invention, a non-transitory computer-readable storage medium storing computer instructions is provided. The computer instructions are configured to cause a computer to implement the method according to the first aspect of the invention.

The fine-grained associated fusion of the first token and the second token is implemented based on the associated token, thereby obtaining more accurate and richer cross-modal tokens, effectively improving the generality and generalization of the tokens and effectively enhancing the effect of recognizing a token.

It should be understood that the content described in this section is not intended to identify key or important features of the embodiments of the invention, nor is it intended to limit the scope of the invention. Additional features of the invention will be easily understood based on the following description.

### BRIEF DESCRIPTION OF THE DRAWINGS

The drawings are used to better understand the solution and do not constitute a limitation to the invention.
FIG. 1 is a schematic diagram according to the first embodiment of the invention.
FIG. 2 is a schematic diagram according to the second embodiment of the invention.
FIG. 3 is a schematic diagram according to the third embodiment of the invention.
FIG. 4 is a flowchart of a method for recognizing a token of image-text data pair according to the embodiment of the invention.
FIG. 5 is a flowchart of a method for recognizing a token of text data or a token of image data according to the embodiment of the invention.
FIG. 6 is a schematic diagram of a grounded fusion transformer according to the embodiment of the invention.
FIG. 7 is a schematic diagram according to the fourth embodiment of the invention.
FIG. 8 is a schematic diagram according to the fifth embodiment of the invention.
FIG. 9 is a schematic diagram of an example electronic device used to implement the method for recognizing a token according to the embodiment of the invention.

### DETAILED DESCRIPTION

The following describes the exemplary embodiments of the invention with reference to the accompanying drawings, which includes various details of the embodiments of the invention to facilitate understanding, which shall be considered merely exemplary. For clarity and conciseness, descriptions of well-known functions and structures are omitted in the following description.

In the related art, the recognized tokens lack generality and generalization, which leads to unsatisfied effect of token recognition. For example, for different modal data, the recognized tokens are not accurate or it is impossible to recognize the cross-modal tokens.

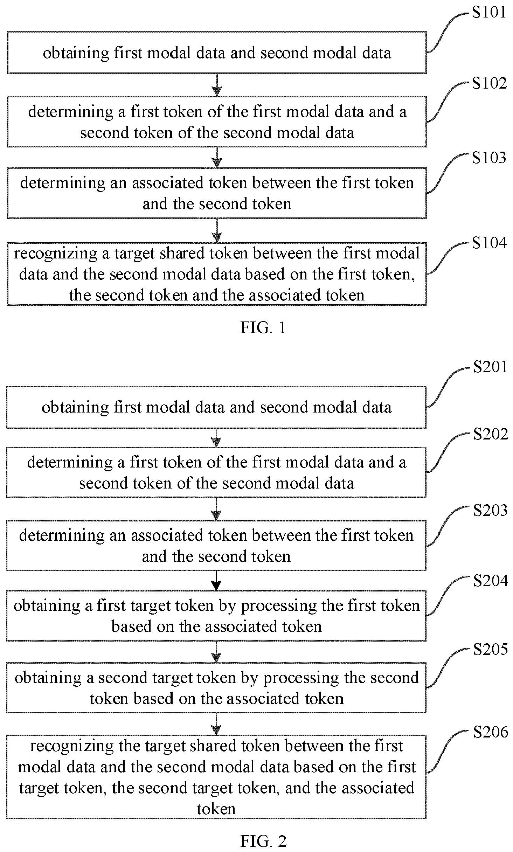

FIG. 1 is a schematic diagram according to the first embodiment of the invention.

It should be noted that the method for recognizing a token in this embodiment may be executed by an apparatus for recognizing a token which can be implemented by means of software and/or hardware and can be configured in an electronic device. The electronic device may include, but is not limited to, a terminal and a server side.

The embodiment of the invention relates to the field of AI technologies such as deep learning and natural language processing.

AI is a new technical science that studies and develops theories, methods, technologies and application systems for simulating, extending and expanding human intelligence.

Deep learning is to learn internal laws and representation levels of sample data. The information obtained in the learning process is of great help to interpretation of data such as text, images and sounds. The ultimate goal of deep learning is to enable machines to have an ability to analyze and learn like humans, having an ability to recognize data such as text, images and sounds.

Natural language processing is the use of computers to process, understand and use human language (e.g., Chinese and English). It is an interdisciplinary discipline between computer science and linguistics, and is also often referred to as computational linguistics. Since natural language is the fundamental sign that distinguishes humans from other animals. Without language, human thinking would not be possible, so natural language processing embodies the highest task and realm of AI. That is, only when the computer has the ability to process natural language, the machine is considered to have achieved true intelligence.

The collection, storage, use, processing, transmission, provision and invention of the user's personal information involved in the technical solution disclosed herein are handled in accordance with the relevant laws and regulations and do not violate public order and morality.

As illustrated in FIG. 1, the method for recognizing a token includes the following blocks.

At block S101, first modal data and second modal data are obtained.

The method for recognizing a token described in the embodiment of the invention may support recognizing tokens for various types of data, such as, text data, image data and image-text data pair. Correspondingly, the various types of data may have different modalities, such as, an image modal, a text modal and a speech modal, which is not limited herein.

The modality corresponding to the first modal data may be the same as or different from the modality corresponding to the second modal data, which is not limited.

That is, the obtained first modal data and the second modal data may have the same modality, or the obtained first modal data and the second modal data may have different modalities, which is not limited.

For example, the first modal data may be image data acquired by using a camera, and the first modal data may correspond to the image modal, and then text data collected by a text acquisition device is determined as the second modal data, and the second modal data may correspond to the text modal, which is not limited.

In some embodiments, after collecting the image data having the image modal by the camera and acquiring the text data having the text modal by the text acquisition device, the above text data and image data are aligned to obtain the first modal data and second modal data after aligning. The aligned first modal data and second modal data may be referred to as the image-text data pair, which is not limited.

At block S102, a first token of the first modal data and a second token of the second modal data are determined.

The token can be used to describe token information or semantic information corresponding to the modal data, which can be a content token of the data, a context token of the data and a keyword token of the data. Specifically, these tokens may be for example, image features corresponding to the image data, and text features corresponding to the text data, which is not limited.

The token corresponding to the first modal data may be called the first token. Correspondingly, the token corresponding to the second modal data may be called the second token. The first token and the second token may or may not be the same, which is not limited.

In some embodiments, determining the first token of the first modal data and the second token of the second modal data may include: inputting the first modal data and the second modal data into a pre-trained Convolutional Neural Networks (CNN), to obtain the first token corresponding to the first modal data and the second token corresponding to the second modal data output by the CNN network, which is not limited.

Alternatively, determining the first token of the first modal data and the second token of the second modal data may include: performing feature extraction on the first modal data and the second modal data respectively by using a feature extraction algorithm, to obtain features corresponding to the first modal data as the first token, and features corresponding to the second modal data as the second token, which is not limited.

At block S103, an associated token between the first token and the second token is determined.

There may be some tokens associated between the first token and the second token, which is called the associated tokens in the invention. The associated token may be a content-related token between the first token and the second token, or a context-related token between the first token and the second token. Specifically, the associated token may be for example, the same token in both the first token and the second token, and a token whose similarity satisfies preset conditions between the first token and the second token, which is not limited.

That is, determining the associated token between the first token and the second token may include: determining a similarity between the first token and the second token after determining the first token of the first modal data and the second token of the second modal data, and determining a token whose similarity satisfies the preset conditions as the associated token between the first token and the second token.

For example, a similarity threshold may be preset for the similarity between the first token and the second token, and the similarity between the first token and the second token is determined. When the determined similarity is greater than the similarity threshold, the first token and the second token are jointly determined as the associated token between the first token and the second token, which is not limited.

Alternatively, determining the associated token between the first token and the second token may include: splitting the first token and the second token respectively to obtain a plurality of tokens corresponding to the first token and a plurality of tokens corresponding to the second token after determining the first token of the first modal data and the second token of the second modal data, and determining the same tokens between the plurality of tokens corresponding to the first token and the plurality of tokens corresponding to the second token as the associated tokens, which is not limited.

For example, suppose that after obtaining the first token "the weather is fine today with gale in some areas", the first token is split into "the weather is fine today" and "with gale in some areas". After obtaining the second token "the weather is fine today, and the temperature is 12 degrees", the second token is split into "the weather is fine today" and "the temperature is 12 degrees". Then, the same token "the weather is fine today" in the split tokens for the first token and the second token is determined as the associated token between the first token and the second token, which is not limited.

At block S104, a target shared token between the first modal data and the second modal data is recognized based on the first token, the second token and the associated token.

When the first modal data and the second modal data contain the same token, the token can be called the target shared token.

For example, suppose that the first modal data (for example, image data) describes "a birthday cake with burning candles" and the second modal data (for example, text data) is "the birthday cake tastes good", the same token "birthday cake" in the first modal data and the second modal data is determined as the target shared token, which is not limited.

In some embodiments, recognizing the target shared token between the first modal data and the second modal data based on the first token, the second token and the associated token may include: fusing the first token and the second token based on the associated token to obtain a fused token, and inputting the fused token into a pre-trained token decoder to obtain token information output by the token decoder, and determining the token information as the target shared token between the first modal data and the second modal data. Alternatively, any other possible way may also be used to recognize the target shared token between the first modal data and the second modal data based on the first token, the second token and the associated token, e.g., the way of model prediction and the way of parsing features, which is not limited.

In this embodiment, the first modal data and the second modal data are obtained, and the first token of the first modal data and the second token of the second modal data are determined. The associated token between the first token and the second token is determined, and the target shared token between the first modal data and the second modal data is recognized based on the first token, the second token and the associated token. The fine-grained associated fusion of the first token and the second token is implemented based on the associated token, which may obtain more accurate and richer cross-modal tokens, effectively improve the generality and generalization of the tokens and effectively enhance the token recognition effect.

FIG. 2 is a schematic diagram according to the second embodiment of the invention.

As illustrated in FIG. 2, the method for recognizing a token includes the following blocks.

At block S201, first modal data and second modal data are obtained.

At block S202, a first token of the first modal data and a second token of the second modal data are determined.

At block S203, an associated token between the first token and the second token is determined.

The description of blocks S201 to S203 can be found in the above embodiments and will not be repeated here.

At block S204, a first target token is obtained by processing the first token based on the associated token.

In the embodiment, after the associated token between the first token and the second token is determined, the first token can be processed according to the associated token, to obtain the corresponding token, which can be called the first target token.

In some embodiments, processing the first token according to the associated token may be splicing the associated token and the first token and determining the spliced token as the first target token, or may be matching the associated token and the first token and determining a token that matches the associated token as the first target token.

Certainly, any other possible way can be used to process the first token based on the associated token, to obtain the first target token, which is not limited.

Optionally, in some embodiments, obtaining the first target token by processing the first token according to the associated token may be aligning the associated token and the first token, and determining the aligned first token as the first target token.

That is, in the embodiment of the invention, after the associated token between the first token and the second token is determined, the associated token and the first token can be aligned, the aligned first token is the first target token. The first token can be unified into the associated token space by aligning the associated token and the first token, so that the first token can learn more information about the associated token, thereby effectively improving the generality of the first target token, and facilitating a token fusion process based on the first target token in the subsequent implementation for the token recognition method.

For example, aligning the associated token and the first token may include: determining an associated token vector and a first token vector, obtaining an aligned token vector by aligning the associated token vector and the first token vector, and determining the aligned token vector as the first target token, which is not limited.

At block S205, a second target token is obtained by processing the second token based on the associated token.

In the embodiment of the invention, after the associated token between the first token and the second token is determined, the second token can be processed according to the associated token to obtain a corresponding token, which can be called the second target token.

In some embodiments, processing the second token according to the associated token may be splicing the associated token and the second token, and determining the spliced token as the second target token, or may be matching the associated token and the second token, and determining a token that matches the associated token as the second target token.

In other embodiments, any other possible way is used to process the second token based on the associated token to obtain the second target token, which is not limited.

Optionally, in some embodiments, obtaining the second target token by processing the second token according to the associated token may be aligning the associated token and the second token, and determining the aligned second token as the second target token.

That is, in the embodiment, after determining the associated token between the first token and the second token, the associated token and the second token can be aligned, and the aligned second token is determined as the second target token. The associated token and the second token are aligned to unify the second token into the associated token space, so that the second token can learn more information about the associated token, thereby effectively improving the generality of the second target token, and facilitating a token fusion process based on the second target token in the subsequent implementation for the token recognition method.

For example, aligning the associated token and the second token may include: determining an associated token vector and a second token vector, obtaining a aligned token by aligning the associated token vector and the second token vector, and determining the aligned token as the second target token, which is not limited.

At block S206, a target shared token between the first modal data and the second modal data is recognized based on the first token, the second token and the associated token.

In the embodiment of the invention, after determining the first target token, the second target token and the associated token, the target shared token between the first modal data and the second modal data may be recognized based on the first token, the second token and the associated token. The first token and the second token are processed respectively according to the associated token, so that the first token and the second token can be unified into the associated token space, thus more robust first target token and second target token can be obtained. Therefore, when the target shared token between the first modal data and the second modal data is recognized based on the first target token, the second target token and the associated token, the recognition effect of the target shared token can be effectively improved.

In the embodiment of the invention, the first modal data and the second modal data are obtained, the first token of the first modal data and the second token of the second modal data are determined, and the associated token between the first token and the second token is determined. Then, the first token is processed based on the associated token to obtain the first target token, so that the first token can be unified into the space of the associated token, thus the first token can learn more information about the associated token, thereby effectively improving the generality of the first token and facilitating the token fusion process based on the first target token in the subsequent implementation of token recognition method. Moreover, the second token is processed according to the associated token to obtain the second target token, so that the second token can be unified into the space of the associated token, thus the second token can learn more information about the associated token, thereby effectively improving the generality of the second token and facilitating the token fusion process based on the second target token in the subsequent implementation of token recognition method. Further, when the target shared token between the first modal data and the second modal data is recognized based on the first target token, the second target token and the associated token, the recognition effect of the target shared token can be effectively improved.

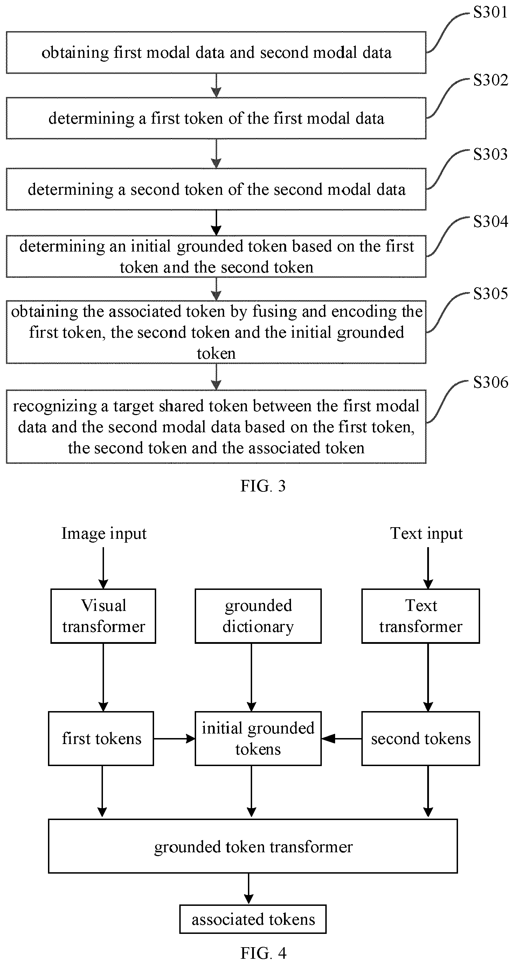

FIG. 3 is a schematic diagram according to the third embodiment of the invention.

As illustrated in FIG. 3, the method for recognizing a token includes the following blocks.

At block S301, first modal data and second modal data are obtained.

The description of block S301 can be found in the above embodiments and will not be repeated here.

At block S302, a first token of the first modal data is determined.

Optionally, in some embodiments, when determining the first token of the first modal data, the first modal data is divided to obtain a plurality of image blocks, each image block includes a plurality of pieces of image pixel information, and a token encoding process is performed on the plurality of pieces of image pixel information to obtain a plurality of corresponding image block tokens, and then the plurality of image block tokens are determined as the first token. Since the first modal data is divided and processed, the first modal data having a huge data amount can be divided into finer-grained image blocks, thus when the token encoding process is performed on the image pixel information corresponding to the image blocks, the data processing amount for a single token encoding process can be reduced effectively, thereby effectively improving the efficiency of the token encoding process, the token encoding effect of the first modal data, and the accuracy and reference ability of the first token.

In the embodiment of the invention, the first modal is an image modal. Correspondingly, the first modal data may be image data.

In the embodiment of the invention, the image data can be divided into a plurality of image blocks, and the plurality of image blocks have a plurality of pieces of information. The information for describing the plurality of image pixels corresponding to the plurality of image blocks can be called image pixel information.

The plurality of image blocks each has a corresponding token, which can be called the image block token. The image block token is used to describe a context-related image block token, which is not limited.

In the embodiment of the invention, after the first modal data is divided into the plurality of image blocks, the plurality of pieces of image pixel information corresponding to the plurality of image blocks can be subjected to the token encoding process respectively, to obtain the plurality of corresponding image block tokens, and the image block tokens are determined as the first token.

For example, during the image block tokens are determined, the first modal data V is divided into a plurality of image blocks VI, V2, V3, ..., Vn, and the plurality of image blocks have the plurality of pieces of image pixel information *v*₁, ..., *vₙ.* The plurality of pieces of corresponding image pixel information are input into a pre-trained visual transformer in the form of sequence *V* = {[*CLS*], *v*_{1,} ..., *vₙ*} ([CLS] represents a start symbol of the sequence V) , a multi-layer attention mechanism of the visual transformer can perform the token encoding process on the plurality of pieces of image pixel information corresponding to the plurality of image blocks, to obtain the plurality of image block tokens, and the plurality of corresponding image block tokens are determined as the first token, which is not limited.

At block S303, a second token of the second modal data is determined.

Optionally, in some embodiments, determining the second token of the second modal data may include: dividing the second modal data into a plurality of text symbols; performing a token encoding process on the plurality of text symbols, to obtain a plurality of text tokens; and determining the plurality of text tokens as the second token. Since the second modal data is divided and processed, the second modal data having a huge data amount can be divided into finer-grained text symbols, thus when the token encoding process is performed on the text symbols, the text data processing amount for a single token encoding process can be reduced effectively, thereby effectively improving the efficiency of the token encoding process, the token encoding effect of the second modal data, and the accuracy and reference ability of the second token.

In the embodiment of the invention, the second modal may be a text modal. Correspondingly, the second modal data may be text data. The text data may be, for example, English text data or Chinese text data, which is not limited.

In the embodiment of the invention, the text data can be divided into the plurality of text symbols. The text symbols can be Chinese phrases and Chinese characters in the Chinese text data, or letters and words in the English text data, which is not limited.

For example, the second modal data is divided into the plurality of text symbols. For example, the text "I like eating apples" is divided into "I", "Like", "Eating" and "Apples" as the plurality of text tokens.

The plurality of text tokens can have corresponding tokens, which can be called text tokens. The text tokens may be context-related text tokens, which is not limited.

In the embodiment of the invention, after the second modal data is divided into the plurality of text symbols, the token encoding process is performed on the plurality of text symbols, to obtain the plurality of text tokens and determine the plurality of text tokens as the second token.

For example, during a plurality of text tokens are determined, the second modal data W may be divided into a plurality of text symbols *t*₁, ..., *tₘ*. The text symbols are input into a pre-trained text transformer in the form of sequence W = *{[CLS], t*₁, ..., *tₘ*} ([CLS] represents a start symbol of the sequence W), a multi-layer attention mechanism of the text transformer can perform the token encoding process on the plurality of text symbols, to obtain the plurality of text tokens, and the plurality of text tokens are determined as the second token, which is not limited.

At block S304, an initial grounded token is determined based on the first token and the second token.

In the embodiment of the invention, in order to unify the first token and the second token at a semantic level, a shared grounded dictionary may be generated, in which each grounded token in the dictionary can be a shared token at the semantic level between the first modal data and the second modal data. That is, there can be grounded tokens corresponding to the first token and the second token in the grounded dictionary, the grounded tokens can be called initial grounded tokens.

In some embodiments, determining the initial grounded token according to the first token and the second token may include: parsing the first token and the second token to obtain a corresponding grounded token ID, recognizing a grounded token corresponding to the grounded token ID from the grounded dictionary according to the grounded token ID, and determining the recognized grounded token as the initial grounded token, which is not limited.

In some other embodiments, determining the initial grounded token based on the first token and the second token may be: obtaining an initial grounded token sequence G *=* {*g*₁, *...*, *gₖ*} corresponding to the first token and/or the second token by performing a cluster calculation process on a plurality of image block tokens corresponding to the first token and a plurality of text tokens corresponding to the second token.

Optionally, in some embodiments, determining the initial grounded token based on the first token and the second token, includes: determining cluster description information between the first token and the second token, and determining a grounded token matching the cluster description information from a grounded dictionary as the initial grounded token. Since the initial grounded token is determined in combination with the grounded dictionary, the method for recognizing a token is not limited to the image-text data pair. That is, based on the grounded dictionary, learning the joint tokens can be implemented for the image data, the text data and other non-aligned image-text data pair, thus the largescale non-aligned image-text data pair can be effectively used, which effectively improves the availability of data and the applicability of the method for recognizing a token. In addition, since the cluster description information can be used to determine the initial grounded token from the grounded dictionary, the efficiency of determining the initial grounded token and the accuracy of the initial grounded token can be effectively improved.

The grounded dictionary includes: the cluster description information and the grounded token matching the cluster description information.

In the embodiment of the invention, the cluster process on the first token and the second token can be supported to obtain a corresponding cluster result. Correspondingly, the information used to describe the aforementioned cluster result can be referred to as the cluster description information, which can be cluster identification information or cluster result information, which is not limited.

Optionally, in some embodiments, determining the cluster description information between the first token and the second token may be: obtaining similarity information between a target image block token and a target text token, and determining the similarity information as the cluster description information. After determining the similarity information between the target image block token and the target text token, and determining the similarity information as the cluster description information, the accuracy of the cluster description information can be effectively improved, thus the cluster description information can have high reference value when executing the method for recognizing a token based on the cluster description information.

The information used to describe the similarity between the target image block token and the target text token is called the similarity information, which can be, for example, the similarity between the target image block token and the target text token. For example, the similarity information may be a Euclidean distance between the target image block token and the target text token, or a vector cosine between the target image block token and the target text token, which is not limited.

The target image block token belongs to the plurality of image block tokens, the target text token belongs to the plurality of text tokens, the target image block token and the target text token belong to the same data category obtained by clustering. In an example, the clustering process may include: dynamically clustering the plurality of image block tokens (or the plurality of text tokens) into a plurality of grounded dictionary tokens based on similarities, in which each grounded dictionary token refers to a clustering center; replacing each image block token (or each text token) with a corresponding grounded dictionary token; outputting by a multilayer neural network a target image block token (or a target text token) for the replaced token. The image block token may refer to a vector representation outputted by the multilayer neural network for an input image block. The text token may refer to a vector representation outputted by the multilayer neural network for an input text, i.e., a word of the text.

That is, in the embodiments of the invention, determining the similarity between the first token and the second token may be obtaining the Euclidean distance between the first token and the second token and determining the Euclidean distance as the similarity information between the target image block token and the target text token, or obtaining the vector cosine between the first token and the second token and determining the vector cosine as the similarity information between the target image block token and the target text token, and determining the similarity information as the cluster description information, which is not limited.

In the embodiment of the invention, after determining the cluster description information between the first token and the second token, the grounded token that matches the cluster description information is determined from the grounded dictionary, and then the grounded token can be used as the initial grounded token, which is not limited.

At block S305, the first token, the second token and the initial grounded token are fused and encoded to obtain the associated token.

In the embodiment of the invention, after obtaining the initial grounded token, the first token, the second token and the initial grounded token may be fused and encoded to obtain the associated token. Since the first token, the second token and the initial grounded token are fused and encoded to obtain the associated token, the first token and the second token are aligned in the space of the initial grounded token, and the space of the initial grounded token can better associate the token information between different modal data on the token, thereby effectively improving the generality and reference ability of the associated token.

In the embodiment of the invention, when the associated token is obtained by fusing and encoding the first token, the second token and the initial grounded token, a pre-trained transformer may output the associated token by fusing and encoding the first token, the second token and the initial grounded token after the first token, the second token and the initial grounded token may be input together into the pre-trained transformer.

For example, FIG. 4 illustrates a flowchart of a method for recognizing a token of image-text data pair according to the embodiment of the invention. The image data in the image-text data pair can be input to a visual transformer to obtain the first token, and the text data can be input to a text transformer to obtain the second token. Next, the first token, the second token and the initial grounded token in the grounded dictionary can be input together to the pre-trained grounded token fusion transformer to obtain the associated token.

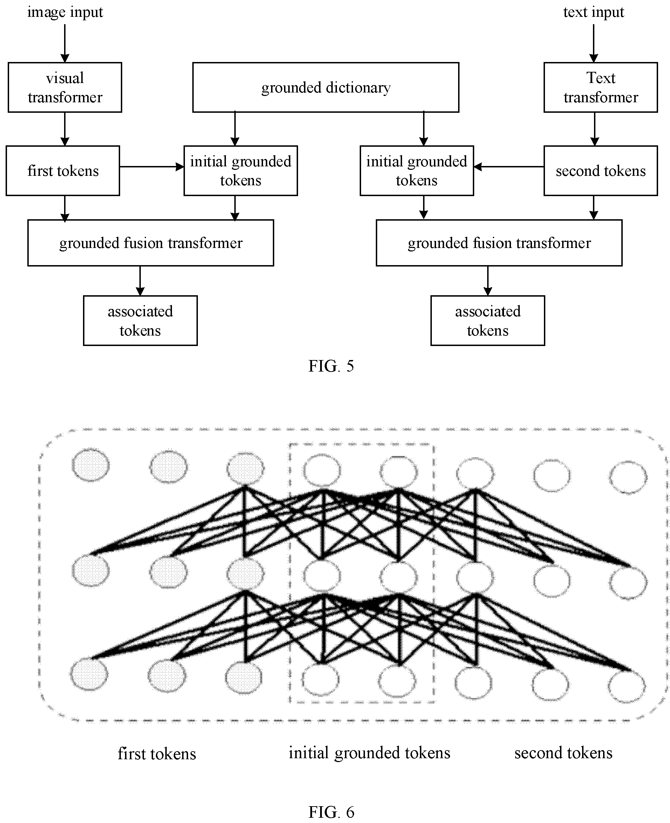

FIG. 5 illustrates a flowchart of a method for recognizing a token of text data or a token of image data according to the embodiment of the invention. The image data can be input into the visual transformer to obtain the first token, and the first token and the initial grounded token in the grounded dictionary can be input together into the pre-trained grounded token fusion transformer to obtain the associated token corresponding to the image data. The text data can also be input into the text transformer to obtain the second token, and the second token and the initial grounded token in the grounded dictionary can then be input into the pre-trained grounded token fusion transformer to obtain the associated token corresponding to the text data.

Optionally, in some embodiments, obtaining the associated token by fusing and encoding the first token, the second token and the initial grounded token may include: determining fusion weight information based on the similarity information, and obtaining the associated token by fusing and encoding the first token, the second token and the initial grounded token based on the fusion weight information.

In the embodiment of the invention, the similarity information can be used to describe a degree of semantic association between the first modal data and the second modal data. The degree of semantic association between the first modal data and the second modal data varies, such as, strongly correlated, weakly correlated or even uncorrelated. That is, different degrees of semantic association can be adapted to different degrees of semantic fusion. In order to adaptively learn the semantic interaction between modalities for different modal data, fusion weights for the first token, the second token, and the initial grounded token can be determined respectively based on the degree of semantic association between the first modal data and the second modal data (the fusion weights can be referred to as fusion weight information). The first token, the second token and the initial grounded token can be fused and encoded based on the corresponding weights to obtain the associated token.

In this embodiment of the invention, since the fusion weight information is determined based on the similarity information, and the similarity information can be used to represent the semantic association degree between different modal data, when determining the fusion weight information based on the similarity information, it is possible to control the fusion degree between different tokens based on the semantic association degree between different modal data, which effectively avoids the problems caused by the insufficient fusion degree and excessive fusion degree, guarantees smooth execution of the token fusion encoding process, and effectively improves the fusion encoding effect between the same tokens.

In the embodiment of the invention, FIG. 6 illustrates a schematic diagram of a grounded fusion transformer according to the embodiment of the invention. When the associated token is obtained by fusing and encoding the first token, the second token and the initial grounded token, the fusion weight information is determined based on the similarity information, and the associated token is obtained by fusing and encoding the first token and the second token interactively based on the fusion weight information, with the initial grounded token as a bridge.

At block S306, a target shared token between the first modal data and the second modal data is recognized based on the first token, the second token and the associated token.

The description of S306 can be described specifically in the above embodiment and will not be repeated here.

In this embodiment, the first modal data and the second modal data are obtained, the first token of the first modal data and the second token of the second modal data are determined, then the initial grounded token is determined based on the first token and the second token. Then, the associated token is obtained by fusing and encoding the first token, the second token, and the initial grounded token, so that the first token and the second token are aligned in the space of the initial grounded token, and the space of the initial grounded token can better associate the token information between different modal data on the token, thereby effectively enhancing the generality and reference ability of the associated token. The target shared token between the first modal data and the second modal data is recognized based on the first token, the second token and the associated token, thus the token recognition effect can be effectively improved.

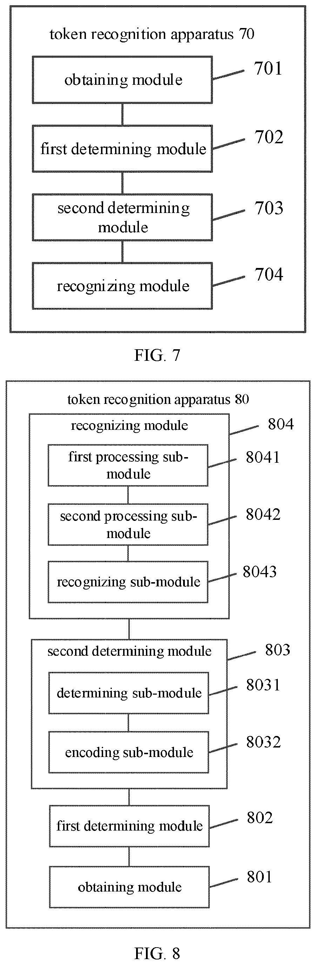

FIG. 7 is a schematic diagram according to the fourth embodiment of the invention.

As illustrated in FIG. 7, an apparatus for recognizing a token 70 includes: an obtaining module 701, a first determining module 702, a second determining module 703 and a recognizing module 704.

The obtaining module 701 is configured to obtain first modal data and second modal data.

The first determining module 702 is configured to determine a first token of the first modal data and a second token of the second modal data.

The second determining module 703 is configured to determine an associated token between the first token and the second token.

The recognizing module 704 is configured to recognize a target shared token between the first modal data and the second modal data based on the first token, the second token and the associated token.

In some embodiments of the invention, FIG. 8 is a schematic diagram of the fifth embodiment according to the invention. As illustrated in FIG. 8, an apparatus for recognizing a token 80 includes: an obtaining module 801, a first determining module 802, a second determining module 803 and a recognizing module 804. The recognizing module 804 includes: a first processing sub-module 8041, a second processing sub-module 8042 and a recognizing sub-module 8043.

The first processing sub-module 8041 is configured to obtain a first target token by processing the first token based on the associated token, to obtain a first target token.

The second processing sub-module 8042 is configured to obtain a second target token by processing the second token based on the associated token, to obtain a second target token.

The recognizing sub-module 8043 is configured to recognize the target shared token between the first modal data and the second modal data based on the first target token, the second target token, and the associated token.

In some embodiments of the invention, the first processing sub-module 8041 is further configured to: align the associated token and the first token, and determine the aligned first token as the first target token. The second processing sub-module is further configured to: align the associated token and the second token, and determine the aligned second token as the second target token.

In some embodiments of the invention, the first modal is an image modal. The first determining module 802 is further configured to: divide the first modal data into a plurality of image blocks, in which the plurality of image blocks each includes a plurality of pieces of image pixel information; obtain a plurality of image block tokens by performing a token encoding process on the plurality of pieces of image pixel information; and determine the plurality of image block tokens as the first token.

In some embodiments of the invention, the second modal is a text modal. The first determining module 802 is further configured to: divide the second modal data into a plurality of text symbols; obtaining a plurality of text tokens by performing a token encoding process on the plurality of text symbols; and determine the plurality of text tokens as the second token.

In some embodiments of the invention, the second determining module 803 includes: a determining sub-module 8031 and an encoding sub-module 8032. The determining sub-module 8031 is configured to determine an initial grounded token based on the first token and the second token. The encoding sub-module 8032 is configured to fuse and encode the first token, the second token and the initial grounded token, to obtain the associated token.

In some embodiments of the invention, the determining sub-module 8031 is further configured to: determine cluster description information between the first token and the second token; and determine a grounded token matching the cluster description information from a grounded dictionary as the initial grounded token. The grounded dictionary includes: the cluster description information and the grounded token matching the cluster description information.

In some embodiments of the invention, the determining sub-module 8031 is further configured to: obtain similarity information between a target image block token and a target text token, and determine the similarity information as the cluster description information.

The target image block token belongs to the plurality of image block tokens, the target text token belongs to the plurality of text tokens, and the target image block token and the target text token belong to the same data category obtained by clustering.

In some embodiments of the invention, the encoding sub-module 8032 is further configured to: determine fusion weight information based on the similarity information; and obtain the associated token by fusing and encoding the first token, the second token and the initial grounded token based on the fusion weight information.

It is understood that the apparatus 80 in the embodiment of FIG. 8 the apparatus 70 in the above embodiment, the obtaining module 801 and the obtaining module 701 in the above embodiment, the first determining module 802 and the first determining module 702 in the above embodiment, the second determining module 803 and the second determining module 703 in the above embodiment, and the recognizing module 804 and the recognizing module 704 in the above embodiment, may have the same function and structure.

It should be noted that the above explanation of the method for recognizing a token is also applicable to the apparatus for recognizing a token in this embodiment.

In the embodiment, the first modal data and the second modal data are obtained, and the first token of the first modal data and second token of the second modal data are determined. The associated token between the first token and the second token are determined. The target shared token between the first modal data and the second modal data are recognized based on the first token, the second token and the associated token. The implementation of fine-grained associative fusion of the first token and the second token based on the associated token enables the recognition and acquisition of more accurate and richer cross-modal tokens, thereby effectively improving the generality and generalization of the tokens and effectively enhancing the token recognition effect.

According to the embodiments of the invention, the invention also provides an electronic device, a readable storage medium and a computer program product.

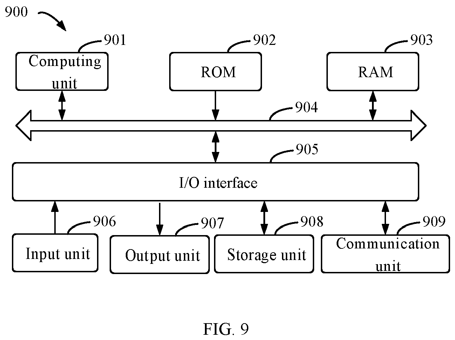

FIG. 9 is a block diagram of an electronic device used to implement the method for recognizing a token according to the embodiments of the invention. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the invention described and/or required herein.

As illustrated in FIG. 9, the electronic device 900 includes a computing unit 901 performing various appropriate actions and processes based on computer programs stored in a Read-Only Memory (ROM) 902 or computer programs loaded from the storage unit 908 to a Random Access Memory (RAM) 903. In the RAM 903, various programs and data required for the operation of the device 900 are stored. The computing unit 901, the ROM 902, and the RAM 903 are connected to each other through a bus 904. An Input / Output (I/O) interface 905 is also connected to the bus 904.

Components in the device 900 are connected to the I/O interface 905, including: an input unit 906, such as a keyboard, a mouse; an output unit 907, such as various types of displays, speakers; a storage unit 908, such as a disk, an optical disk; and a communication unit 909, such as network cards, modems, and wireless communication transceivers. The communication unit 909 allows the device 900 to exchange information/data with other devices through a computer network such as the Internet and/or various telecommunication networks.

The computing unit 901 may be various general-purpose and/or dedicated processing components with processing and computing capabilities. Some examples of computing unit 901 include, but are not limited to, a Central Processing Unit (CPU), a Graphics Processing Unit (GPU), various dedicated AI computing chips, various computing units that run machine learning model algorithms, and a Digital Signal Processor (DSP), and any appropriate processor, controller and microcontroller. The computing unit 901 executes the various methods and processes described above, such as the method for recognizing a token. For example, in some embodiments, the method may be implemented as a computer software program, which is tangibly contained in a machine-readable medium, such as the storage unit 908. In some embodiments, part or all of the computer program may be loaded and/or installed on the device 900 via the ROM 902 and/or the communication unit 909. When the computer program is loaded on the RAM 903 and executed by the computing unit 901, one or more steps of the method described above may be executed. Alternatively, in other embodiments, the computing unit 901 may be configured to perform the method in any other suitable manner (for example, by means of firmware).

Various implementations of the systems and techniques described above may be implemented by a digital electronic circuit system, an integrated circuit system, Field Programmable Gate Arrays (FPGAs), Application Specific Integrated Circuits (ASICs), Application Specific Standard Products (ASSPs), System On Chip (SOCs), Complex Programmable Logic Devices (CPLDs), computer hardware, firmware, software, and/or a combination thereof. These various embodiments may be implemented in one or more computer programs, the one or more computer programs may be executed and/or interpreted on a programmable system including at least one programmable processor, which may be a dedicated or general programmable processor for receiving data and instructions from the storage system, at least one input device and at least one output device, and transmitting the data and instructions to the storage system, the at least one input device and the at least one output device.

The program code configured to implement the method of the invention may be written in any combination of one or more programming languages. These program codes may be provided to the processors or controllers of general-purpose computers, dedicated computers, or other programmable data processing devices, so that the program codes, when executed by the processors or controllers, enable the functions/operations specified in the flowchart and/or block diagram to be implemented. The program code may be executed entirely on the machine, partly executed on the machine, partly executed on the machine and partly executed on the remote machine as an independent software package, or entirely executed on the remote machine or server.

In the context of the invention, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, RAM, ROM, electrically programmable read-only-memory (EPROM), flash memory, fiber optics, Compact Disc Read-Only Memory (CD-ROM), optical storage devices, magnetic storage devices, or any suitable combination of the foregoing.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (e.g., a communication network). Examples of communication networks include: Local Area Network (LAN), Wide Area Network (WAN), the Internet and the block-chain network.

The computer system may include a client and a server. The client and server are generally remote from each other and interacting through a communication network. The client-server relation is generated by computer programs running on the respective computers and having a client-server relation with each other. The server may be a cloud server, also known as a cloud computing server or a cloud host, which is a host product in the cloud computing service system, to solve the defects of difficult management and weak business scalability in the traditional physical host and Virtual Private Server (VPS) service. The server can also be a server of distributed system or a server combined with block-chain.

It should be understood that the various forms of processes shown above can be used to reorder, add or delete steps. For example, the steps described in the invention could be performed in parallel, sequentially, or in a different order, as long as the desired result of the technical solution disclosed in the invention is achieved, which is not limited herein.

The above specific embodiments do not constitute a limitation on the protection scope of the invention.

## Claims

1. A method for recognizing a token, performed by an electronic device, comprising:
obtaining (S101, S201, S301) first modal data and second modal data;
determining (S102, S202, S302) a first token of the first modal data and a second token of the second modal data (S303);
determining (S103, S203) an associated token between the first token and the second token; and
recognizing (S1I04, S306) a target shared token between the first modal data and the second modal data based on the first token, the second token and the associated token.

2. The method of claim 1, wherein recognizing the target shared token between the first modal data and the second modal data comprises:
obtaining (S204) a first target token by processing the first token based on the associated token;
obtaining (S205) a second target token by processing the second token based on the associated token; and
recognizing (S206) the target shared token between the first modal data and the second modal data based on the first target token, the second target token, and the associated token.

3. The method of claim 1 or 2, wherein obtaining the first target token comprises:
aligning the associated token and the first token, and determining the aligned first token as the first target token; and
obtaining the second target token comprises:
aligning the associated token and the second token, and determining the aligned second token as the second target token.

4. The method of any one of claims 1 to 3, wherein the first modal is an image modal, and
determining the first token of the first modal data, comprises:
dividing the first modal data into a plurality of image blocks, wherein the plurality of image blocks comprise a plurality of pieces of image pixel information;
obtaining a plurality of image block tokens by performing a token encoding process on the plurality of pieces of image pixel information; and
determining the plurality of image block tokens as the first token.

5. The method of any one of claims 1 to 4, wherein the second modal is a text modal, and
determining the second token of the second modal data, comprises:
dividing the second modal data into a plurality of text symbols;
obtaining a plurality of text tokens by performing a token encoding process on the plurality of text symbols; and
determining the plurality of text tokens as the second token.

6. The method of any one of claims 1 to 5, wherein determining the associated token between the first token and the second token, comprises:
determining (S304) an initial grounded token based on the first token and the second token; and
obtaining (S305) the associated token by fusing and encoding the first token, the second token and the initial grounded token.

7. The method of claim 6, wherein determining the initial grounded token comprises:
determining cluster description information between the first token and the second token;
determining a grounded token matching the cluster description information from a grounded dictionary as the initial grounded token; wherein
the grounded dictionary comprises: pieces of cluster description information and grounded tokens matching the pieces of cluster description information.

8. The method of claim 7, wherein determining the cluster description information between the first token and the second token, comprises:
obtaining similarity information between a target image block token and a target text token, and determining the similarity information as the cluster description information;
wherein the target image block token belongs to the plurality of image block tokens, the target text token belongs to the plurality of text tokens, and the target image block token and the target text token belong to the same data category obtained by clustering.

9. The method of any one of claims 6 to 8, wherein obtaining the associated token by fusing and encoding the first token, the second token and the initial grounded token, comprises:
determining fusion weight information based on the similarity information; and
obtaining the associated token by fusing and encoding the first token, the second token and the initial grounded token based on the fusion weight information.

10. An apparatus (70, 80) for recognizing a token, comprising:
an obtaining module (701, 801), configured to obtain first modal data and second modal data;
a first determining module (702, 802), configured to determine a first token of the first modal data and a second token of the second modal data;
a second determining module (703, 803), configured to determine an associated token between the first token and the second token; and
a recognizing module (704, 804), configured to recognize a target shared token between the first modal data and the second modal data based on the first token, the second token and the associated token.

11. The apparatus of claim 10, wherein the recognizing module comprises:
a first processing sub-module, configured to obtain a first target token by processing the first token based on the associated token;
a second processing sub-module, configured to obtain a second target token by processing the second token based on the associated token; and
a recognizing sub-module, configured to recognize the target shared token between the first modal data and the second modal data based on the first target token, the second target token, and the associated token.

12. The apparatus of claim 11, wherein the first processing sub-module is further configured to:
align the associated token and the first token, and determine the aligned first token as the first target token; and
the second processing sub-module is further configured to:
align the associated token and the second token, and determine the aligned second token as the second target token.

13. The apparatus of any one of claims 10 to 12, wherein the first modal is an image modal, and
the first determining module is further configured to:
divide the first modal data into a plurality of image blocks, wherein the plurality of image blocks comprise a plurality of pieces of image pixel information;
obtain a plurality of image block tokens by performing a token encoding process on the plurality of pieces of image pixel information; and
determine the plurality of image block tokens as the first token.

14. An electronic device, comprising:
at least one processor; and
a memory communicatively coupled to the at least one processor; wherein,
the memory stores instructions executable by the at least one processor, when the instructions are executed by the at least one processor, the at least one processor is enabled to implement the method of any one of claims 1-9.

15. A non-transitory computer-readable storage medium having computer instructions stored thereon, wherein the computer instructions are configured to cause a computer to implement the method of any one of claims 1-9.
